# EUROPÄISCHE PATENTSCHRIFT

(11) **EP 4 323 664 B1**
(45) Veröffentlichungstag und Bekanntmachung des Hinweises auf die Patenterteilung: **10.09.2025**
(21) Anmeldenummer: 22721763.5
(22) Anmeldetag: 08.04.2022
(51) Int. Cl.: F16C 33/08, F16C 17/02, F16C 33/04, F16C 33/20

(54) **PRÄZISIONSGLEITLAGER**
PRECISION SLIDING BEARING
PALIER LISSE DE PRÉCISION

(30) Priorität: 12.04.2021 DE 202021101949 U
(43) Veröffentlichungstag der Anmeldung: 21.02.2024
(73) Patentinhaber: igus GmbH, 51147 Köln (DE)
(72) Erfinder: NIERMANN, Stefan, 50968 Köln (DE); JAEKEL, Marco, 40764 Langenfeld (DE); KLEINE, Fabian, 50259 Pulheim (DE); POLLE, Sebastian, 51503 Rösrath (DE); RUGE, Johannes, 50829 Köln (DE); TÜRKER, Muhammet Erkam, 52388 Nörvenich (DE)
(74) Vertreter: Lippert Stachow Patentanwälte Rechtsanwälte
(86) Internationale Anmeldenummer: PCT/EP2022/059520
(87) Internationale Veröffentlichungsnummer: WO 2022/218880

(56) Entgegenhaltungen:
- WO-A1-2008/124608
- DE-C2- 3 249 706
- KR-A- 20130 046 731
- US-A- 3 084 003
- US-A- 3 637 273
- US-A1- 2003 063 826

## Beschreibung

Die Erfindung betrifft ein Präzisionsgleitlager gemäß dem Oberbegriff von Anspruch 1.

Ein gattungsgemäßes Gleitlager umfasset einen aus einem Grundmaterial hergestellten, sich entlang einer Längsachse erstreckenden hohlzylinderartigen Lagerkörper, der mit seiner Innenseite eine Durchführung umschließt, wobei in der Durchführung an der Innenseite des Lagerkörpers ein von dem Grundmaterial unterschiedliches Gleitmaterial vorgesehen ist, das eine innerhalb der Durchführung liegende Gleitführung umschließt. Die Durchführung und die Gleitführung sind üblicherweise nach Art eines Zylinders ausgebildet, wobei die in der Durchführung liegende Gleitführung einen geringeren Durchmesser als die Durchführung aufweist und bestimmungsgemäß in der Gleitführung eine zylindrische Welle aufgenommen wird, deren Durchmesser im Wesentlichen dem Durchmesser der Gleitführung entspricht, insbesondere weniger als 0,05, insbesondere weniger als 0,03 mm von diesem abweicht.

Gattungsgemäße Gleitlager werden im Stand der Technik zur präzisen gleitenden Führung einer im Gleitlager gelagerten zylindrischen Welle eingesetzt. Bei einer bestimmungsgemäßen Verwendung eines gattungsgemäßen Gleitlagers ist die Welle in dem hohlzylinderartigen Lagerkörper aufgenommen und entlang dessen Längsachse an dem Gleitmaterial entlanggleitend verschiebbar, während seine Position senkrecht zur Längsachse durch seine Anordnung in dem Gleitlager möglichst präzise und somit mit möglichst geringem radialen Spiel, bei gattungsgemäßen Gleitlagern üblicherweise mit einem Spiel von weniger als 0,1 mm, insbesondere weniger als 0,05 mm, festgelegt ist, wobei bevorzugt das Gleitlager und die verwendete Welle so aufeinander abgestimmt sind, dass auch bei einer Belastung der in dem Gleitlager aufgenommenen, entlang der Längsachse durch das Gleitlager durchlaufenden Welle ausgehend von einer unbelasteten Ausgangslage mit einer Kraft, die an einer Längsposition der Welle, die 10 cm von einem Längsende des Gleitlagers beabstandet ist und in einer senkrecht zur Längsachse stehenden Querrichtung auf die Welle relativ zum Gleitlager wirkt und 40 N beträgt, die Welle an dem genannten Längsende des Gleitlagers in der Querrichtung nur um weniger als 0,05 mm relativ zur Ausgangslage auslenkbar ist. Zumeist ist die Welle und insbesondere der Lagerkörper aus einem Metall oder einer Metalllegierung, insbesondere aus einem Stahl, einem Edelstahl oder hart anodisiertem Aluminium hergestellt. Durch die hohen Anforderungen an die Präzision eines gattungsgemäßen Gleitlagers ergeben sich besondere Anforderungen an die Ausgestaltung eines Gleitlagers und einer Gleitlageranordnung. Zumeist werden als Wellen Rundwellen eingesetzt, und entsprechend ist die Durchführung nach Art eines Zylinders mit runder Grundfläche ausgebildet. Ferner muss das Gleitmaterial unter möglichst vollständiger Vermeidung eines Spiels in der Durchführung auf das Grundmaterial aufgebracht sein. Im Stand der Technik sind hierzu gattungsgemäße Gleitlager bekannt, bei denen das Gleitmaterial in Form einer fest angebrachten Beschichtung der inneren Oberfläche des Lagerkörpers vorhanden ist, wodurch eine Robustheit und Präzision des Gleitlagers gewährleistet werden kann. Das feste Aufbringen des Gleitmaterials bedingt jedoch, dass unterschiedliche Lager mit je nach Anwendungszweck unterschiedlichen Gleitmaterialien für verschiedene Anwendungszwecke bereitgehalten werden müssen.

Ferner sind Gleitlager bekannt, bei denen das Gleitmaterial als getrennter, hülsenförmiger Körper ausgebildet ist, dessen Wandung einen in Längsrichtung des Körpers verlaufenden durchgehenden Schlitz aufweist, so dass die Hülse unter elastischer Verformung derselben in den Lagerkörper einsetzbar und somit unter elastischer Vorspannung in diesem gehalten ist, wobei besondere Vorkehrungen getroffen sein können, um die Hülse in ihrer bestimmungsgemäßen Arbeitsposition zu fixieren. Solche Gleitlager sind jedoch als Präzisionsgleitlager nicht geeignet, da die zwingend vorgesehene Elastizität und für ihre Stabilität zwingend vorgesehene Wandstärke des hülsenförmigen Gleitmaterials eine hinreichend präzise Ausgestaltung des Gleitlagers nicht möglich macht.

US 3 084 003 A offenbart die Merkmale des Oberbegriffs von Anspruch 1.

Der vorliegenden Erfindung liegt die Aufgabe zugrunde, zumindest einen Nachteil gattungsgemäßer Gleitlager und Gleitlageranordnungen zumindest teilweise zu beheben. Zur Lösung dieser Aufgabe schlägt die Erfindung vor, dass das Gleitlager ein hohlzylinderartiges, aus dem Gleitmaterial hergestelltes Gleitelement umfasst, das in der Durchführung des Lagerkörpers angeordnet ist und die Gleitführung umfänglich geschlossen umschließt und eine Wandstärke von vorzugsweise weniger als 1 mm aufweist, wobei das Gleitelement einen Vorsprung aufweist, mit dem es in eine an der Innenseite des Lagerkörpers vorgesehene Ausnehmung eingreift zur Festlegung einer Relativposition, bezogen auf die Längsachse, zwischen dem Gleitelement und dem Lagerkörper und das Gleitelement mit einer radialen Presspassung in die Durchführung des Lagerkörpers eingepresst ist. Bei dem erfindungsgemäßen Gleitlager ist somit in Abkehr von der Ausgestaltung eines üblichen gattungsgemäßen Gleitlagers ein von dem hohlzylinderartigen Lagerkörper separates Gleitelement vorgesehen, das unabhängig von dem Lagerkörper hergestellt ist und zur Realisierung des Lagerkörpers in die Durchführung eingeführt ist. Der vorliegenden Erfindung liegt die Erkenntnis zugrunde, dass auch mit einem solchen separaten Gleitelement die Realisierung eines Präzisionsgleitlagers ermöglicht ist, indem das separate Gleitelement besonders ausgestaltet und in der Durchführung angeordnet ist. Zum einen weist das Gleitelement bevorzugt eine besonders geringe Wandstärke, d.h. Dicke seines Hohlzylindermantels von weniger als 1 mm, insbesondere weniger als 0,9 mm auf. Hierdurch ist eine Reduzierung eines Spiels einer in der Gleitführung angeordneten Welle nach Möglichkeit reduziert. Zum anderen wurde erkannt, dass eine hinreichende Stabilität des Gleitelements, die eine entsprechend dünne Ausgestaltung seiner Wandstärke ermöglicht, erreicht werden kann, wenn das Gleitelement die Gleitführung zumindest in einem Längsabschnitt der Durchführung umfänglich geschlossen und somit ununterbrochen umschließt. Denn dann kann das Gleitelement in diesem Längsabschnitt mit seinem Außenumfang umfänglich geschlossen an der Durchführung anliegen, wodurch eine hinreichende Stabilität erzeugt werden kann, insbesondere dann, wenn bestimmungsgemäß eine Welle in der Gleitführung angeordnet ist. Besonders bevorzugt liegt dieser Längsabschnitt in einem Längsendbereich der Durchführung, der sich ausgehend von einem Längsende der Durchführung über höchstens 20 %, insbesondere über höchstens 10 % der Längserstreckung der Durchführung erstreckt. Bevorzugt verläuft der Längsendabschnitt durchgehend über den gesamten Längsendbereich der Durchführung hinweg, insbesondere erstreckt er sich auch über den Längsendabschnitt hinaus zur Längsmitte der Durchführung hin. Bevorzugt erstreckt sich der Längsendabschnitt über mindestens 30 % der Längserstreckung des Gleitelements. Bevorzugt bildet der genannte Längsabschnitt des Gleitelements ein Längsende des Gleitelements und ist von dem gegenüberliegenden Längsende entlang der Längsachse durch den Federabschnitt beabstandet, wobei bevorzugt die Längserstreckung des Gleitelements durch die Summe der Längserstreckung seines genannten Längsabschnitts und seines Federabschnitts gebildet ist. Ferner trägt zur vorteilhaften Eigenschaft des erfindungsgemäßen Gleitlagers in besonderem Maße bei, dass das Gleitelement sowohl mit seinem Vorsprung in eine an der Innenseite des Lagerkörpers vorgesehene Ausnehmung eingreift und somit durch einen Formschluss mit dem Lagerkörper in seiner Position entlang der Längsachse relativ zum Lagerkörper festgelegt ist, als auch in einer radialen Presspassung in die Durchführung eingepresst ist. Bevorzugt ist die Presspassung eine zumindest über 30 % der Längserstreckung des Gleitelements umfänglich geschlossen zwischen Durchführung und Gleitelement wirkende Presspassung. Durch die Presspassung ist ein radiales Spiel einer in der Gleitführung angeordneten Welle minimiert. Bevorzugt ist das Gleitelement durch das Eingreifen des Vorsprungs in die Ausnehmung des Lagerkörpers dergestalt entlang der Längsachse relativ zum Lagerkörper fixiert, dass das Gleitelement wenigstens eine stirnseitige Begrenzung des Lagerkörpers, d.h. wenigstens ein Längsende des Lagerkörpers, insbesondere beide stirnseitigen Begrenzungen des Lagerkörpers, nicht überragt, wobei besonders bevorzugt das Gleitelement wenigstens ein Längsende der Durchführung, insbesondere beide Längsenden der Durchführung nicht überragt. Besonders bevorzugt ist das Gleitelement von zumindest einem Längsende der Durchführung um weniger als 1 mm beabstandet. Allgemein bevorzugt ist das Gleitelement in der Durchführung am Lagerkörper lösbar fixiert, insbesondere von dem Lagerkörper entfernbar, indem der Vorsprung radial aus der Ausnehmung entfernt wird und anschließend unter Überwindung der durch die zwischen Lagerkörper und Gleitelement wirkenden Reibkraft das Gleitelement entlang der Längsachse aus der Durchführung gezogen wird.

Das erfindungsgemäße Gleitlager bringt wesentliche Vorteile mit sich. Durch das Vorsehen eines separaten Gleitelements kann das Gleitelement im Wartungsfall einfach getauscht werden, ohne dass, wie bei gattungsgemäßen Lagern üblich, das vollständige Lager ersetzt zu werden braucht. Ferner kann durch das separate Gleitelement eine einfache Anpassbarkeit des Gleitlagers an eine gewünschte Einsatzumgebung gewährleistet sein, da das Material des Gleitelements gezielt für die Einsatzumgebung gewählt werden kann, jedoch für unterschiedliche Einsatzumgebungen geeignete Gleitlager jeweils denselben Lagerkörper aufweisen können, so dass sich bevorzugt solche unterschiedlichen Gleitlager nur in dem Material unterscheiden, aus dem das Gleitelement des jeweiligen Gleitlagers hergestellt ist. Hierdurch können Herstellungs- und Lagerkosten eingespart werden. Ferner gewährleistet das erfindungsgemäße Gleitlager eine präzise und robuste Führung einer Welle.

Das Gleitelement kann einen Mantelteil aufweisen, der nach Art eines Hohlzylinders ausgebildet ist, wobei der Vorsprung des Gleitelementes durch einen an dem Mantelteil vorgesehenen Federabschnitt ausgebildet und insbesondere der Federabschnitt von jedem Längsende der Durchführung um mindestens 25 % einer Gesamtlänge der Durchführung und/oder um mindestens 20 % einer Gesamtlängserstreckung des Gleitelements entlang der Längsachse beabstandet ist. Durch die Beabstandung des Federabschnitts von dem Längsende der Durchführung kann insbesondere auf Höhe des Längsendes der Durchführung, an dem eine besonders hohe Belastung des Gleitelements bei einer in Querrichtung erfolgenden Kraftbeaufschlagung einer in der Gleitführung angeordneten Welle zu erwarten ist, eine besonders hohe Robustheit des Gleitelements ohne Rücksichtnahme auf den Federabschnitt realisiert werden. Bevorzugt weist das Gleitelement mehrere Vorsprünge auf, die in einer Drehrichtung um die Längsachse voneinander beabstandet sind, wobei jeder der Vorsprünge durch jeweils einen von dem zumindest einen anderen Federabschnitt getrennten Federabschnitt ausgebildet ist. Der Federabschnitt ist dergestalt an dem Mantelteil angeordnet, dass bei einer relativ zum Mantelteil ausgeübten Kraft radial zur Längsachse und somit senkrecht zur Längsrichtung auf den Vorsprung der Vorsprung radial zur Längsachse ausgelenkt wird, während der Federabschnitt eine der Kraft entgegenwirkende Federkraft ausbildet, wobei nach Aufhebung der Kraft der Vorsprung wieder in seine Ausgangslage zurückkehrt. Bevorzugt erstreckt sich der Federabschnitt über weniger als 50 %, insbesondere über 20 % bis 50 % der Gesamtlängserstreckung des Gleitelements, wodurch sowohl eine hinreichende Federeigenschaft als auch eine hinreichende Stabilität gewährleistet sein kann.

Der Federabschnitt kann zwischen zwei entlang der Längsachse verlaufenden, in einem Längsabschnitt des Mantelteils ausgebildeten Schlitzen ausgebildet und somit von diesen senkrecht zur Längsachse begrenzt sein. Bevorzugt münden diese Schlitze in ein stirnseitiges Ende, d.h. Längsende des Gleitelements, so dass die Schlitze als Randausnehmungen ausgebildet sind. Dies bringt den besonderen Vorteil mit sich, dass das Gleitelement mit diesem Längsende auf einfache Weise und unter Realisierung einer Presspassung in dem Lagerkörper entlang der Längsachse in die Durchführung eingeführt werden kann. Zudem kann der Federabschnitt in dem realisierten Lager dann von einem Längsende der Durchführung entfernt angeordnet sein. Bevorzugt erstreckt sich der Federabschnitt zwischen den Schlitzen über einen Winkelbereich, bezogen auf einen Drehwinkel um die Längsachse, von mindestens 20°, insbesondere mindestens 30° ununterbrochen. Hierdurch kann eine besonders hohe Stabilität gewährleistet sein. Bevorzugt erstreckt sich der Federabschnitt über einen Winkelbereich von 20° bis 120°, insbesondere von 30° bis 90° zwischen den Schlitzen. Hierdurch kann eine hinreichende Elastizität und Stabilität besonders begünstigt sein. Bevorzugt erstrecken sich die Schlitze jeweils über höchstens ein Drittel des Winkelbereichs um die Längsachse, über den sich der Federabschnitt erstreckt. Bevorzugt weist das Gleitelement mehrere Federabschnitte auf, die voneinander um einen Drehwinkel von mindestens 45°, insbesondere mindestens 60° um die Längsachse beabstandet sind. Bevorzugt sind die Federabschnitte senkrecht zur Längsachse beidseitig durch jeweils einen Schlitz begrenzt, wobei der Mantelteil zwischen zwei in Drehrichtung um die Längsachse benachbarten Federabschnitten einen Verbindungsbereich ausbildet, der sich von einem einen ersten der beiden benachbarten Federabschnitte begrenzenden Schlitz bis zu einem einen zweiten der beiden benachbarten Federabschnitte begrenzenden Schlitz erstreckt. Bevorzugt erstreckt sich der Verbindungsbereich über einen Winkelbereich um die Längsachse von mindestens 30°, insbesondere mindestens 60°, insbesondere zwischen 30° und 150°, insbesondere zwischen 60° und 130°. Bevorzugt überlappt das Mantelteil in dem Verbindungsbereich entlang der Längsachse durchgehend mit den die beiden benachbarten Federabschnitte begrenzenden Schlitzen, insbesondere mit der gesamten Längserstreckung der Schlitze, so dass er sich entlang der Längsachse entlang den Schlitzen erstreckt. Die beschriebene Abstimmung der Breite und Anordnung der Federabschnitte ist für die Realisierung eines dünnwandigen und hinreichend robusten Gleitelements, das durch radiale Verpressung und axialen Hinterschnitt in dem Lagerkörper zuverlässig gehalten ist, besonders vorteilhaft. Bevorzugt sind die Federabschnitte gleichmäßig um die Längsachse verteilt. Bevorzugt sind zwei, insbesondere genau zwei Federabschnitte an zwei radial gegenüberliegenden Seiten des Mantelteils vorgesehen.

Der Mantelteil kann einen Längsabschnitt aufweisen, der die Längsachse und somit auch die Gleitführung umfänglich geschlossen umschließt. Bevorzugt weist der Mantelteil innerhalb dieses gesamten Längsabschnittes hinweg einen selben lichten Querschnitt auf. Bevorzugt erstreckt sich dieser Längsabschnitt des Mantelteils über mindestens 50 % einer Gesamtlängserstreckung des Gleitelements erstreckt und/oder ist um weniger als 10 %, insbesondere weniger als 5 % der Gesamtlängserstreckung des Gleitelements von einem absoluten Längsende der Durchführung beabstandet.

Das Gleitelement weist an seiner Außenseite vorzugsweise mehrere Vorsprünge auf, die entlang einer Drehrichtung um die Längsachse verteilt angeordnet und vorzugsweise nach außen gerichtet sind.

Der Lagerkörper kann innerhalb seiner Durchführung, insbesondere in einem bezogen auf die Längsachse mittleren Bereich der Durchführung, wenigstens eine vorzugsweise senkrecht zur Längsachse verlaufende Ausnehmung aufweisen, in die der wenigstens eine Vorsprung eingreift. Bevorzugt erstreckt sich die Ausnehmung über mindestens 50 %, insbesondere mindestens 70 % des Umfangs der Durchführung, bevorzugt umfänglich geschlossen über den Umfang der Durchführung.

Bevorzugt ist das Gleitelement aus einem tribologischen Polymer hergestellt. Ein solches tribologisches Polymer ist ein mit Bezug auf Verschleißminderung und Reibminderung optimiertes Polymer. Üblicherweise weist ein solches tribologisches Polymer ein Basispolymer auf, beispielsweise die Thermoplaste Polyethen, Polypropylen, Polyacetal, Polycarbonat, Polyamid, Polyvinylchlorid, Polytetrafluorethen sowie bei den Duroplasten Phenolharze. Diesem Basispolymer sind feinteilige Feststoffschmiermittel, beispielsweise Molybdändisulfid oder Graphit, und/oder Füllstoffe, beispielsweise Kunststoff- oder Textilfasern oder -partikel, beigefügt.

Gemäß einem weiteren Vorschlag der Erfindung kann das Gleitlager zwei Gleitelementabschnitte aufweisen, die entlang der Längsachse nebeneinander und jeweils in der Durchführung angeordnet sind und jeweils an ihrer Außenseite einen Vorsprung aufweisen, mit dem sie in eine an der Innenseite des Lagerkörpers vorgesehene Ausnehmung, insbesondere gemeinsam in dieselbe Ausnehmung, eingreifen. Die Federabschnitte beider Gleitelementabschnitte sind einander entlang der Längsrichtung zugekehrt im inneren Bereich des Lagerkörpers angeordnet. Besonders bevorzugt ist jeder der Gleitelementabschnitte durch jeweils ein wie oben erläutertes Gleitelement ausgebildet, so dass zur Realisierung des Gleitlagers die beiden Gleitelemente jeweils von einem Längsende der Durchführung aus entlang der Längsachse in die Durchführung eingeführt werden. Die Verwendung von zwei Gleitelementabschnitten, die unabhängig voneinander in den Lagerkörper eingesetzt werden, erleichtert die Montage des Gleitlagers. Die Gleitelementabschnitte sind bevorzugt gleichartig ausgebildet, können aber auch unterschiedlich lang sein. Bevorzugt weist das Gleitlager genau zwei Gleitelemente auf, die jeweils einen der beiden Gleitelementabschnitte ausbilden. Bevorzugt liegen die Gleitelemente entlang der Längsachse aneinander an. Durch ein Anliegen der Gleitelemente aneinander, insbesondere während ihre Vorsprünge im Bereich ihrer zueinander gewandten Längsenden in eine an der Innenseite der Durchführung vorgesehene Ausführung eingreifen, insbesondere in eine selbe Ausnehmung eingreifen, kann das Gleitlager besonders robust ausgestaltet sein. Besonders bevorzugt weist jedes der Gleitelemente jeweils einen wie oben erläuterten Längsabschnitt auf, in dem es die Gleitführung umfänglich geschlossen umschließt, wobei der Längsabschnitt eines ersten der Gleitelemente in einem an einem ersten Längsende liegenden Längsendbereich der Durchführung liegt und der Längsabschnitt eines zweiten der Gleitelemente in einem an einem dem ersten Längsende gegenüberliegenden zweiten Längsende liegenden Längsendbereich der Durchführung liegt.

Der Lagerkörper kann an seiner Außenseite umlaufende, entlang der Längsachse voneinander beabstandete Montagerillen aufweisen.

Ferner kann das Gleitlager als Rundwellengleitlager ausgebildet sein, so dass es zur Aufnahme einer zylindrischen Welle mit rundem Querschnitt geeignet ist. Ein Rundwellengleitlager ist für eine präzise Führung besonders vorteilhaft.

Die Erfindung betrifft weiterhin eine Gleitlageranordnung umfassend ein Gleitlager sowie eine zylindrische, insbesondere rundzylindrische Welle, die in der Gleitöffnung des Gleitlagers angeordnet ist und sich durch die Durchführung hindurch erstreckt und an dem wenigstens einen Gleitelement bzw. Gleitelementabschnitt anliegt, insbesondere über mindestens 50 %, insbesondere mindestens 70 %, insbesondere mindestens 80 % ihrer innerhalb der Durchführung liegenden Außenfläche an dem Gleitelement anliegt. Bevorzugt weist das Gleitlager zwei Gleitelemente auf

In der Zeichnung ist ein Ausführungsbeispiel der Erfindung dargestellt.

Es zeigen:
- Figur 1:: in einer schematischen Prinzipdarstellung eine Ausführungsform eines erfindungsgemäßen Gleitlagers im Längsschnitt;
- Figur 2:: in einer schematischen Prinzipdarstellung den Lagerkörper des Gleitlagers gemäß Figur 1 im Längsschnitt;
- Figur 3a:: in verschiedenen schematischen Prinzipdarstellungen verschiedene Ansichten eines Gleitelements des Gleitlagers gemäß Figur 1.

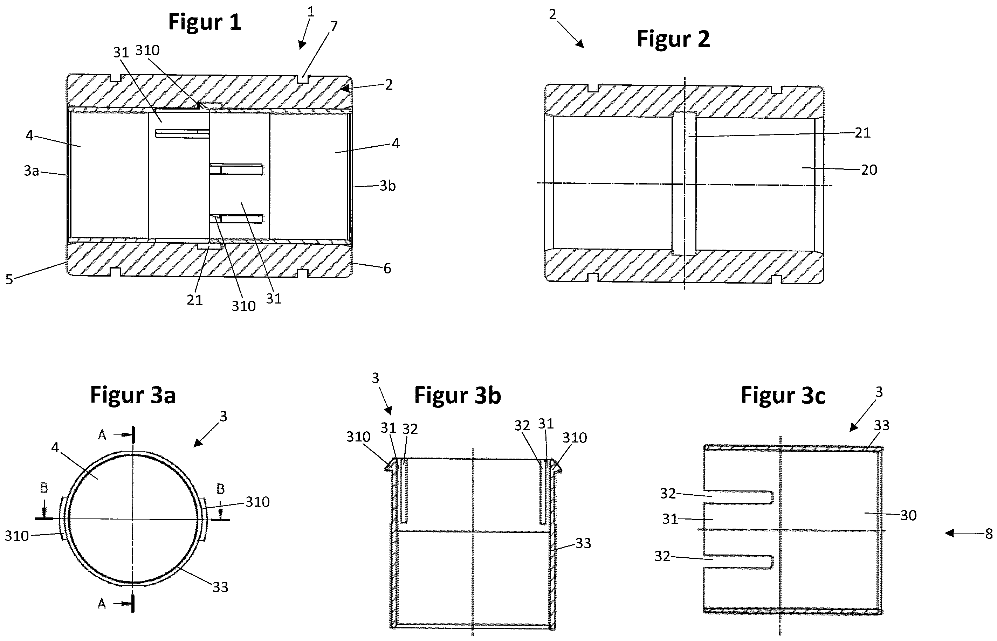

In den Figuren 1 bis 3 ist ein Ausführungsbeispiel eines erfindungsgemäßen Gleitlagers 1 erläuternd dargestellt. Dabei zeigt Figur 1 einen Längsschnitt des gesamten Gleitlagers 1, Figur 2 einen Längsschnitt des Lagerkörpers 2 und Figur 3, umfassend Figuren 3a, 3b und 3c, verschiedene Ansichten eines der beiden in dem Gleitlager 1 verwendeten, im vorliegenden Ausführungsbeispiel identisch ausgebildeten Gleitelemente 3. Bei dem in den Figuren dargestellten Ausführungsbeispiel ist der Lagerkörper 2 des Gleitlagers 1 in Form einer Buchse ausgebildet, in deren Durchführung 20 zwei Gleitelemente 3 eingesetzt sind, die jeweils einen von zwei gleichartigen Gleitelementabschnitten 3a, 3b ausbilden, die in der Durchführung 20 des Lagerkörpers 2 in Längsrichtung desselben hintereinander derart angeordnet sind, dass sie eine sich zwischen den beiden Stirnenden bzw. Längsenden 5, 6 des Lagerkörpers 2 befindliche Einheit bilden, deren Länge gleich der des Lagerkörpers 2 sein kann. Vorliegend sind die Längsenden des Lagerkörpers 2 auch die Längsenden der Durchführung 20. Die Gleitelementabschnitte 3a, 3b decken die innere Mantelfläche des Lagerkörpers 2 mit Ausnahme jener funktionell jedoch nicht relevanten Bereiche ab, welche durch Schlitze bzw. Randausnehmungen 32 gebildet sind, die in jedem Gleitelementabschnitt 3a, 3b in dessen Längsendbereich angeordnet sind, der dem des jeweils anderen Gleitelementabschnittes 3a, 3b gegenüberliegt. Die Schlitze 32 jedes Gleitelementabschnittes 3a, 3b begrenzen einen Federabschnitt 31, der stärker elastisch verformbar ist und an seinem freien Ende einen Vorsprung 310 aufweist, der nach außen weist und flanschartig ausgebildet sein kann.

Der Lagerkörper 2 ist an seiner inneren Mantelfläche mit einer vorteilhafterweise umlaufenden, beispielsweise nutartigen Ausnehmung 21 versehen, die in der Mitte der Längserstreckung des Lagerkörpers 2 angeordnet ist, ohne dass Letzteres eine zwingende Notwendigkeit wäre.

In montiertem Zustand des Gleitlagers 1, der etwa der Figur 1 der Zeichnungen zu entnehmen ist, greifen die Vorsprünge 310 der Gleitelementabschnitte 3a, 3b, d.h. des jeweiligen Gleitelementes 3, in die Ausnehmung 21 im Lagerkörper 2 ein, wobei im konkreten Fall für die Vorsprünge 310 jedes Gleitelementabschnittes 3a, 3b eine gemeinsame nutförmige Ausnehmung 21 vorgesehen ist. Es können aber auch zwei Ausnehmungen 21 vorhanden sein.

In jedem Fall lässt sich durch die in die innere Begrenzungswandung des Lagerkörpers 2 eingreifenden Vorsprünge 310 eine formschlüssige Verbindung zwischen den Gleitelementabschnitten 3a, 3b des Gleitlagers 1 und dem Lagerkörper 2 auf einfache Weise herstellen, die eine Position der Gleitelementabschnitte 3a, 3b relativ zum Lagerkörper 2 entlang der Längsachse festlegt.

Die Montage des vorbeschriebenen Gleitlagers 1 erfolgt auf einfache Weise dadurch, dass von jedem stirnseitigen Ende 5, 6 des Lagerkörpers 2 jeweils ein den jeweiligen Gleitelementabschnitt 3a bzw. 3b ausbildendes Gleitelement 3 in die Öffnung der Durchführung 20 eingeschoben wird. Zur Erzielung der radialen Presspassung zwischen Lagerkörper 2 und Gleitelement 3 bzw. dessen Gleitelementabschnitten 3a, 3b kann das den jeweiligen Gleitelementabschnitt 3a, 3b ausbildende hohlzylinderartige Gleitelement 3 einen Außendurchmesser aufweisen, welcher geringfügig größer ist als der Innendurchmesser des Lagerkörpers 2, wobei das mit den Schlitzen 32 versehene Ende des jeweiligen Gleitelements 3 etwas radial zusammengedrückt wird, um den mit den Schlitzen 32 versehenen stirnseitigen Randbereich in die jeweilige Öffnung der Durchführung 20 einführen zu können, wobei dieses radiale Zusammendrücken so weit erfolgt, dass auch die durch die Vorsprünge 310 bewirkte Vergrößerung des Außendurchmessers des jeweiligen Gleitelementabschnitts 3a, 3b kompensiert wird.

Die Zeichnung lässt erkennen, dass auf die vorbeschriebene Weise ein Gleitlager 1 mit größerer Länge hergestellt werden kann. Durch das Vorsehen von zwei separaten Gleitelementen, die von jeweils einem Längsende 5, 6 des Lagerkörpers 2 in die Durchführung 20 eingesetzt sind, bleibt die Montage des Gleitlagers 1 trotz der dabei herzustellenden Verbindung mittels radialer Presspassung einfach.

Der Lagerkörper 2 des Gleitlagers 1 kann in Abhängigkeit von den jeweiligen Gegebenheiten aus unterschiedlichen Werkstoffen, z. B. aus Metallen, hergestellt werden. Für das Gleitelement 3 kann ein dafür geeigneter Werkstoff verwendet werden, bei dem es sich um einen Kunststoff, insbesondere ein tribologisches Polymer handeln kann.

### Bezugszeichenliste

- 1: Gleitlager
- 2: Lagerkörper
- 3: Gleitelement
- 3a, 3b: Gleitelementabschnitt
- 4: Gleitführung
- 5: Stirnende
- 6: Stirnende
- 7: Montagerille
- 8: Pfeil
- 20: Durchführung
- 21: Ausnehmung
- 31: Federabschnitt
- 32: Schlitz
- 33: Mantelteil
- 310: Vorsprung

## Patentansprüche

1. Gleitlager (1) umfassend einen aus einem Grundmaterial hergestellten, sich entlang einer Längsachse erstreckenden hohlzylinderartigen Lagerkörper (2), der mit seiner Innenseite eine Durchführung (20) umschließt, wobei in der Durchführung (20) an der Innenseite des Lagerkörpers (2) ein von dem Grundmaterial unterschiedliches Gleitmaterial vorgesehen ist, das eine innerhalb der Durchführung (20) liegende Gleitführung (4) umschließt, wobei das Gleitlager (1) zumindest ein hohlzylinderartiges, aus dem Gleitmaterial hergestelltes Gleitelement (3) umfasst, das in der Durchführung (20) des Lagerkörpers (2) angeordnet ist und die Gleitführung (4) umfänglich geschlossen umschließt und eine Wandstärke von vorzugsweise weniger als 1 mm aufweist, wobei das Gleitelement (3) an seiner Außenseite wenigstens einen Vorsprung (310) aufweist, mit dem es in eine an der Innenseite des Lagerkörpers (2) vorgesehene Ausnehmung (21) eingreift zur Festlegung einer Relativposition zwischen dem Gleitelement (3) und dem Lagerkörper (2), und wobei das Gleitelement (3) mittels einer radialen Presspassung in die Durchführung (20) des Lagerkörpers (2) eingepresst ist,
**dadurch gekennzeichnet, dass**
der Vorsprung (310) derart in die an der Innenseite des Lagerkörpers (2) vorgesehene Ausnehmung (21) eingreift, dass das Gleitelement (3) durch einen Formschluss mit dem Lagerkörper (2) in seiner Position entlang der Längsachse relativ zum Lagerkörper (2) festgelegt ist.

2. Gleitlager (1) nach Anspruch 1,
**dadurch gekennzeichnet, dass**
das Gleitelement (3) einen Mantelteil (33) aufweist, der nach Art eines Hohlzylinders ausgebildet ist, wobei der Vorsprung (310) des Gleitelements (3) durch wenigstens einen an dem Mantelteil (33) vorgesehenen Federabschnitt (31) ausgebildet ist, wobei insbesondere der Federabschnitt (31) von jedem Längsende der Durchführung (20) um mindestens 25 % einer Gesamtlänge der Durchführung (20) entlang der Längsachse beabstandet ist.

3. Gleitlager (1) nach Anspruch 2,
**dadurch gekennzeichnet, dass**
der Mantelteil (33) einen Längsabschnitt aufweist, innerhalb dessen er die Längsachse umfänglich geschlossen umschließt, wobei der Mantelteil (33) innerhalb seines gesamten Längsabschnitts hinweg einen selben lichten Querschnitt aufweist, wobei insbesondere dieser Längsabschnitt des Mantelteils (33) sich über mindestens 50 % einer Gesamtlängserstreckung des Gleitelements (3) erstreckt und/oder um weniger als 10 %, insbesondere weniger als 5 % der Gesamtlängserstreckung des Gleitelements (3) von einem absoluten Längsende der Durchführung (20) beabstandet ist.

4. Gleitlager (1) nach Anspruch 2 oder 3,
**dadurch gekennzeichnet, dass**
der Federabschnitt (31) zwischen zwei entlang der Längsachse verlaufenden, in einem weiteren Längsabschnitt des Mantelteils (33) ausgebildeten Schlitzen (32) ausgebildet ist.

5. Gleitlager (1) nach einem der vorangehenden Ansprüche,
**dadurch gekennzeichnet, dass**
das Gleitelement (3) an seiner Außenseite mehrere Vorsprünge (310) aufweist, die entlang einer Drehrichtung um die Längsachse verteilt angeordnet sind.

6. Gleitlager (1) nach einem der vorangehenden Ansprüche,
**dadurch gekennzeichnet, dass**
der Lagerkörper (2) innerhalb seiner Durchführung (20), insbesondere in einem bezogen auf die Längsachse mittleren Bereich der Durchführung (20), wenigstens eine senkrecht zur Längsachse verlaufende Ausnehmung (21) aufweist, in die der Vorsprung (310) eingreift.

7. Gleitlager (1) nach einem der vorangehenden Ansprüche,
**dadurch gekennzeichnet, dass**
das Gleitlager (1) zwei Gleitelementabschnitte (3a, 3b) aufweist, die entlang der Längsachse nebeneinander und jeweils in der Durchführung (20) angeordnet sind und die jeweils an ihrer Außenseite wenigstens einen Vorsprung (310) aufweisen, mit dem sie jeweils in eine an der Innenseite des Lagerkörpers (2) vorgesehene Ausnehmung (21), insbesondere gemeinsam in dieselbe Ausnehmung (21) eingreifen, wobei insbesondere jeder der Gleitelementabschnitte durch jeweils ein separates Gleitelemente (3) ausgebildet ist.

8. Gleitlager (1) nach einem der vorangehenden Ansprüche,
**dadurch gekennzeichnet, dass**
der Lagerkörper (1) an seiner Außenseite umlaufende, entlang der Längsachse voneinander beabstandete Montagerillen (7) aufweist.

9. Gleitlager (1) nach Anspruch 7 und insbesondere nach Anspruch 8,
**dadurch gekennzeichnet, dass**
die Gleitelementabschnitte (3a, 3b) dieselbe axiale Länge aufweisen.

10. Gleitlager (1) nach einem der vorangehenden Ansprüche,
**dadurch gekennzeichnet, dass**
das Gleitlager (1) als Rundwellengleitlager ausgebildet ist.

11. Gleitlager nach einem der vorangehenden Ansprüche,
**dadurch gekennzeichnet, dass**
das Gleitelement (3) aus einem tribologischen Polymer hergestellt ist.

12. Gleitlageranordnung umfassend ein Gleitlager (1) mit zumindest einem Gleitelement nach einem der vorangehenden Ansprüche sowie eine zylindrische, insbesondere rundzylindrische Welle, die in der Gleitführung (4) des Gleitlagers (1) angeordnet ist und sich durch die Durchführung (20) hindurch erstreckt und an dem zumindest einen Gleitelement (3) anliegt, insbesondere über mindestens 50 %, insbesondere mindestens 70 %, insbesondere mindestens 80 % ihrer innerhalb der Durchführung (20) liegenden Außenfläche an dem zumindest einen Gleitelement (3) anliegt.

## Claims

1. Sliding bearing (1) comprising a bearing body (2) in the manner of a hollow cylinder produced from a base material and extending along a longitudinal axis, which body encloses a bushing (20) with its inside, wherein an antifriction material different from the base material is provided in the bushing (20) at the inside of the bearing body (2), which antifriction material encloses a sliding guide (4) lying within the bushing (20), wherein
the sliding bearing (1) comprises at least one hollow-cylinder-like sliding element (3) made from the antifriction material, which element is arranged in the bushing (20) of the bearing body (2) and encloses the sliding guide (4) in a circumferentially closed manner and has a wall thickness of preferably less than 1 mm, wherein the sliding element (3) has at its outside at least one projection (310), with which it engages in a recess (21) provided at the inside of the bearing body (2) to fix a relative position between the sliding element (3) and the bearing body (2), and wherein the sliding element (3) is pressed by means of a radial press fit into the bushing (20) of the bearing body (2),
**characterized in that**
the projection (310) engages in the recess (21) provided at the inside of the bearing body (2) in such a way that the sliding element (3) is fixed in its position along the longitudinal axis relative to the bearing body (2) by a form fit with the bearing body (2).

2. Sliding bearing (1) according to claim 1,
**characterized in that**
the sliding element (3) comprises a jacket part (33), which is formed in the manner of a hollow cylinder, wherein the projection (310) of the sliding element (3) is formed by at least one spring section (31) provided on the jacket part (33), wherein the spring section (31) in particular is spaced from each longitudinal end of the bushing (20) by at least 25% of a total length of the bushing (20) along the longitudinal axis.

3. Sliding bearing (1) according to claim 2,
**characterized in that**
the jacket part (33) comprises a longitudinal section within which it encloses the longitudinal axis in a circumferentially closed manner, wherein the jacket part (33) has the same clear cross section within its entire longitudinal section, wherein this longitudinal section of the jacket part (33) in particular extends over at least 50% of a total longitudinal extension of the sliding element (3) and/or is spaced by less than 10%, in particular less than 5% of the total longitudinal extension of the sliding element (3) from an absolute longitudinal end of the bushing (20).

4. Sliding bearing (1) according to claim 2 or 3,
**characterized in that**
the spring section (31) is formed between two slots (32) running along the longitudinal axis and formed in a further longitudinal section of the jacket part (33).

5. Sliding bearing (1) according to any one of the preceding claims,
**characterized in that**
the sliding element (3) comprises a number of projections (310) at its outside, which are arranged distributed along a rotary direction about the longitudinal axis.

6. Sliding bearing (1) according to any one of the preceding claims,
**characterized in that**
the bearing body (2) comprises within its bushing (20), in particular in a central area of the bushing (20) with reference to the longitudinal axis, at least one recess (21) running perpendicular to the longitudinal axis in which the projection (310) engages.

7. Sliding bearing (1) according to any one of the preceding claims,
**characterized in that**
the sliding bearing (1) comprises two sliding element sections (3a, 3b), which are arranged adjacent to one another along the longitudinal axis and respectively in the bushing (20) and which each have at their outside at least one projection (310) with which they engage respectively in a recess (21) provided at the inside of the bearing body (2), in particular engage jointly in the same recess (21), wherein each of the sliding element sections in particular is formed by a separate sliding element (3) respectively.

8. Sliding bearing (1) according to any one of the preceding claims,
**characterized in that**
the bearing body (2) comprises at its outside circumferential assembly grooves (7) spaced from one another along the longitudinal axis.

9. Sliding bearing (1) according to claim 7 and in particular according to claim 8,
**characterized in that**
the sliding element sections (3a, 3b) have the same axial length.

10. Sliding bearing (1) according to any one of the preceding claims,
**characterized in that**
the sliding bearing (1) is formed as a round shaft sliding bearing.

11. Sliding bearing according to any one of the preceding claims,
**characterized in that**
the sliding element (3) is made from a tribological polymer.

12. Sliding bearing arrangement comprising a sliding bearing (1) with at least one sliding element according to any one of the preceding claims as well as a cylindrical, in particular circular cylindrical shaft, which is arranged in the sliding guide (4) of the sliding bearing (1) and extends through the bushing (20) and rests at the at least one sliding element (3), in particular rests over at least 50%, in particular at least 70%, in particular at least 80% of its outer surface lying within the bushing (20) at the at least one sliding element (3).

## Revendications

1. Palier lisse (1) comprenant un corps de palier (2) en forme de cylindre creux, fabriqué à partir d'un matériau de base et s'étendant le long d'un axe longitudinal, qui entoure avec sa face intérieure un passage (20), un matériau de glissement différent du matériau de base étant prévu dans le passage (20) sur la face intérieure du corps de palier (2) et entourant un guide de glissement (4) situé à l'intérieur du passage (20), le palier lisse (1) comprenant au moins un élément coulissant (3) en forme de cylindre creux, fabriqué à partir du matériau de glissement, qui est disposé dans le passage (20) du corps de palier (2) et qui entoure de manière fermée le guide de glissement (4) sur son pourtour et présente une épaisseur de paroi de préférence inférieure à 1 mm, l'élément coulissant (3) présentant sur sa face extérieure au moins une saillie (310) avec laquelle il s'engage dans un évidement (21) prévu sur la face intérieure du corps de palier (2) pour définir une position relative entre l'élément coulissant (3) et le corps de palier (2), et l'élément coulissant (3) étant enfoncé dans le passage (20) du corps de palier (2) au moyen d'un ajustement serré radial,
**caractérisé en ce que**
la saillie (310) s'engage dans l'évidement (21) prévu sur la face interne du corps de palier (2) de telle sorte que l'élément coulissant (3) est fixé dans sa position le long de l'axe longitudinal par rapport au corps de palier (2) par une liaison par complémentarité de forme avec le corps de palier (2).

2. Palier lisse (1) selon la revendication 1,
**caractérisé en ce que**
l'élément coulissant (3) comporte une partie d'enveloppe (33) qui est réalisée à la manière d'un cylindre creux, la saillie (310) de l'élément coulissant (3) étant formée par au moins une section de ressort (31) prévue sur la partie d'enveloppe (33), la section de ressort (31) étant en particulier espacée de chaque extrémité longitudinale du passage (20) d'au moins 25 % d'une longueur totale du passage (20) le long de l'axe longitudinal.

3. Palier lisse (1) selon la revendication 2,
**caractérisé en ce que**
la partie d'enveloppe (33) présente une section longitudinale à l'intérieur de laquelle elle entoure l'axe longitudinal de manière fermée sur tout le pourtour, la partie d'enveloppe (33) présentant une même section transversale libre sur toute sa section longitudinale, cette section longitudinale de la partie d'enveloppe (33) s'étendant sur au moins 50 % d'une extension longitudinale totale de l'élément coulissant (3) et/ou est espacée de moins de 10 %, en particulier de moins de 5 % de l'extension longitudinale totale de l'élément coulissant (3) d'une extrémité longitudinale absolue du passage (20).

4. Palier lisse (1) selon la revendication 2 ou 3,
**caractérisé en ce que**
la section de ressort (31) est formée entre deux fentes (32) s'étendant le long de l'axe longitudinal et formées dans une autre section longitudinale de la partie d'enveloppe (33).

5. Palier lisse (1) selon l'une quelconque des revendications précédentes,
**caractérisé en ce que**
l'élément coulissant (3) présente sur sa face extérieure plusieurs saillies (310) qui sont réparties le long d'un sens de rotation autour de l'axe longitudinal.

6. Palier lisse (1) selon l'une quelconque des revendications précédentes,
**caractérisé en ce que**
le corps de palier (2) présente, à l'intérieur de son passage (20), en particulier dans une zone centrale du passage (20) par rapport à l'axe longitudinal, au moins un évidement (21) perpendiculaire à l'axe longitudinal, dans lequel s'engage la saillie (310).

7. Palier lisse (1) selon l'une quelconque des revendications précédentes,
**caractérisé en ce que**
le palier lisse (1) comporte deux sections d'éléments coulissants (3a, 3b) qui sont disposées l'une à côté de l'autre le long de l'axe longitudinal et chacune dans le passage (20) et qui présentent chacune sur leur face extérieure au moins une saillie (310) avec laquelle elles s'engagent chacune dans un évidement (21) prévu sur la face intérieure du corps de palier (2), en particulier ensemble dans le même évidement (21), chacune des sections d'élément coulissant étant notamment formée par un élément coulissant (3) séparé.

8. Palier lisse (1) selon l'une quelconque des revendications précédentes,
**caractérisé en ce que**
le corps de palier (1) présente, sur sa face extérieure, des rainures de montage (7) espacées les unes des autres le long de l'axe longitudinal.

9. Palier lisse (1) selon la revendication 7, et notamment selon la revendication 8,
**caractérisé en ce que**
les sections d'éléments coulissants (3a, 3b) ont la même longueur axiale.

10. Palier lisse (1) selon l'une quelconque des revendications précédentes,
**caractérisé en ce que**
le palier lisse (1) est conçu comme un palier lisse à arbe circulaire.

11. Palier lisse (1) selon l'une quelconque des revendications précédentes,
**caractérisé en ce que**
l'élément coulissant (3) est fabriqué à partir d'un polymère tribologique.

12. Dispositif de palier lisse comprenant un palier lisse (1) avec au moins un élément coulissant selon l'une quelconque des revendications précédentes, ainsi qu'un arbre cylindrique, en particulier cylindrique rond, qui est disposé dans le guide de glissement (4) du palier lisse (1) et s'étend à travers le passage (20) et est en contact avec ledit au moins un élément coulissant (3), en particulier sur au moins 50 %, en particulier au moins 70 %, en particulier au moins 80 % de sa surface extérieure située à l'intérieur du passage (20) sur ledit au moins un élément coulissant (3).
